(19) Europäisches Patentamt
European Patent Office
Office européen des brevets

(11) **EP 2 903 224 B1**

(12) **EUROPEAN PATENT SPECIFICATION**

(45) Date of publication and mention
of the grant of the patent:
**24.10.2018  Bulletin 2018/43**

(21) Application number: **13841898.3**

(22) Date of filing: **04.09.2013**

(51) Int Cl.:
*H04N 21/233* (2011.01)   *H04N 21/647* (2011.01)
*H04N 21/242* (2011.01)   *H04M 3/00* (2006.01)
*H04W 28/02* (2009.01)   *H04L 12/70* (2013.01)
*H04N 21/845* (2011.01)   *H04N 21/2343* (2011.01)
*H04L 29/06* (2006.01)

(86) International application number:
**PCT/JP2013/074442**

(87) International publication number:
**WO 2014/050546 (03.04.2014 Gazette 2014/14)**

(54) **METHOD FOR TRANSMITTING AUDIO INFORMATION AND PACKET COMMUNICATION SYSTEM**

VERFAHREN ZUR ÜBERTRAGUNG VON AUDIOINFORMATIONEN UND
PAKETKOMMUNIKATIONSSYSTEM

PROCÉDÉ DE TRANSMISSION D'INFORMATIONS AUDIO ET SYSTÈME DE COMMUNICATION
DE PAQUET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.09.2012  JP 2012214530**

(43) Date of publication of application:
**05.08.2015  Bulletin 2015/32**

(73) Proprietor: **NEC Corporation
Tokyo 108-8001 (JP)**

(72) Inventor: **OZAWA, Kazunori
Tokyo 108-8001 (JP)**

(74) Representative: **Betten & Resch
Patent- und Rechtsanwälte PartGmbB
Maximiliansplatz 14
80333 München (DE)**

(56) References cited:
**WO-A1-2010/112074      WO-A1-2011/132783
JP-A- 2002 135 322      JP-A- 2008 099 261
JP-A- 2011 135 207      JP-A- 2011 142 622
US-A1- 2004 240 390      US-A1- 2004 267 503
US-A1- 2009 116 458      US-A1- 2010 150 252
US-B1- 7 668 968**

## Description

Technical Field

This invention relates to transmission of audio information through use of packet communication. In particular, this invention relates to transmission of audio information through use of packet communication via a data communication network including, in at least a part thereof, a wireless communication section such as a mobile communication network.

Background Art

When audio information is encoded and transmitted via a packet communication network, a packet delay occurs in some cases depending on a traffic congestion situation of the packet communication network. In particular, in a case of mobile communication such as mobile phone communication, its traffic congestion situation varies greatly depending on the locations of terminals and time.

Accordingly, when the traffic congestion situation is assumed before communication and a data rate corresponding to a bandwidth that is usable under the assumed congestion situation is determined in advance, and the audio information is encoded and packetized to be transmitted at the determined data rate, a bit rate suitable for an actual traffic congestion situation is not necessarily achieved. When the actual traffic is more congested than the assumed one, the packet delay occurs and a real-time characteristic is thus deteriorated. In contrast, when the actual traffic is less congested than the assumed one, an opportunity for transmission at a high bit rate at which data could have been transmitted under this actual traffic situation without a delay is missed as a result.

In recent years, in corporations and the like in particular, the use of a "thin client" starts to become widespread in order to ensure high-level security. The thin client is a technology with which a virtual client on a server is operated from a terminal as if an actual terminal were operated and an application is run through use of the virtual client to generate screen information, and the screen information is transferred to the terminal to be displayed on a screen of the terminal. The thin client has an advantage in that because no data remains in a terminal, there is no fear of leakage of secret information, corporate information, and the like to the outside even if the terminal is lost.

Prior Art Document

Patent Document

Patent Document 1: JP-A-2005-39724
WO 2010/112074 discloses parallel streams to compensate a sudden drop of the radio network condition by switching to the worse case format.

Summary of the Invention

Problem to be Solved by the Invention

The above-mentioned problem also arises even when such a thin client is used to make a voice call under VoIP. The problem is, specifically, as follows. In a mobile network or the Internet, a bandwidth for the network is relatively narrow, and further, the bandwidth varies temporally depending on a traffic congestion situation. When the bandwidth becomes narrower, voice data remains on the network and a delay time that elapses before the voice data arrives at a client becomes longer, which makes it difficult to make a call.
Patent Document 1 is given as a document in which the art related to this invention is disclosed. In Patent Document 1, there is disclosed a system including: terminals A and B capable of dynamically switching one or a plurality of speech coding schemes; and a speech coding scheme converter having a SIP control function. In this system, the speech coding scheme converter having the SIP control function dynamically switches, mutually converts, and relays the speech coding schemes of the terminals A and B, to thereby prevent termination of communication due to a bandwidth shortage.
This invention has been made in view of the above-mentioned circumstances, and it is an object of this invention to transmit, when audio information is transmitted via a packet communication network, the audio information without causing a delay and as higher-quality data in response to a temporal variation of traffic of the packet communication network.

Means to Solve the Problem

The above-mentioned problem is solved by the features of the claims.

Effect of the Invention

According to one embodiment of this invention, the node on the transmission side transmits the one piece of audio information as the plurality of packets having the data amounts that are different from one another, and the node on the reception side selects the packet having the largest data amount from among the packets that have been received without a delay or within the allowable delay time and decodes the audio information of the selected packet. Accordingly, it is possible to transmit the audio information at a higher bit rate within such a range as to enable the transmission without a delay under the congestion situation of the packet communication network at a given time.

Brief Description of the Drawing

Fig. 1 is a block diagram illustrating an audio information transmission system 1 according to one embodiment of this invention.

Fig. 2 is a block diagram of a remote mobile communication system 100 according to a second embodiment of this invention.

Fig. 3 is a block diagram of a server machine 110.

Fig. 4 is a block diagram of a voice determination/transfer unit 185.

Fig. 5 is a block diagram of a portable terminal 170_1.

Modes for Embodying the Invention

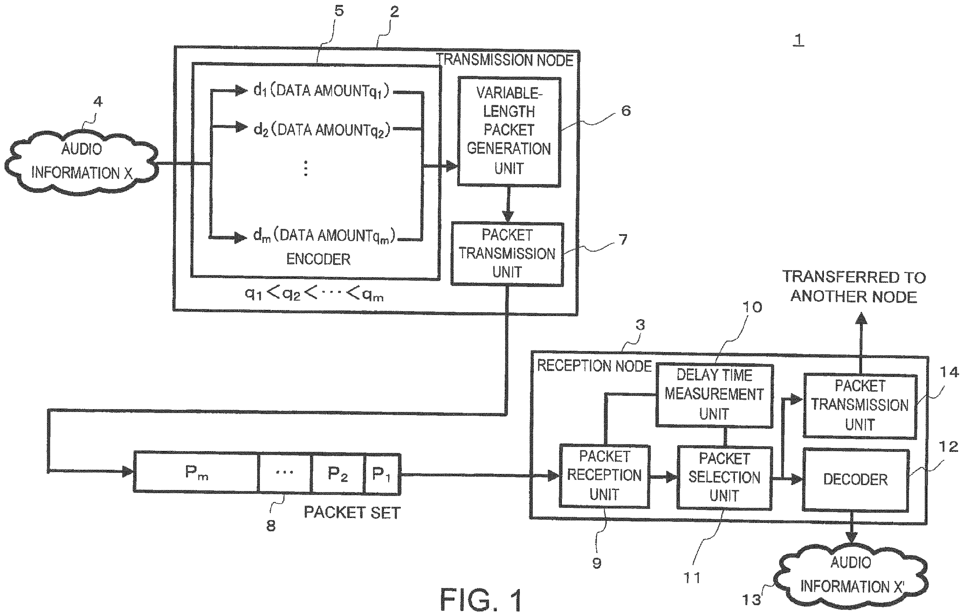

A description is given of an audio information transmission system 1 according to a first embodiment of this invention with reference to Fig. 1. The audio information transmission system 1 includes a transmission node 2 and a reception node 3.

The transmission node 2 is a packet communication device for encoding and packetizing audio information X 4 input thereto and transmitting the resultant audio information to the reception node 3 via a packet communication network. Specifically, the transmission node 2 is preferably a wireless communication device for performing packet data communication, such as a mobile phone terminal, but may also be a server machine or a client device installed on a network such as the Internet. The transmission node 2 includes an encoder 5, a variable-length packet generation unit 6, and a packet transmission unit 7.

The encoder 5 encodes the audio information X 4, and in encoding the audio information X 4, generates a plurality of pieces of data $d_1, d_2, ..., d_m$ (where m is a natural number of 2 or more) corresponding to one piece of audio information X 4. When it is assumed in this case that data amounts of the pieces of data $d_1, d_2, ..., d_m$ are represented by data amounts $q_1, q_2, ..., q_m$, respectively, the encoder 5 generates the pieces of data so that a relationship of $q_1<q_2<...<q_m$ holds. For example, in a case where m=5, the encoder 5 encodes the audio information X 4 at bit rates of 32 kbps, 40 kbps, 48 kbps, 56 kbps, and 64 kbps to generate pieces of data $d_1, d_2, ..., d_5$, respectively.

The variable-length packet generation unit 6 generates variable-length packets each having a packet length corresponding to the data amount. The variable-length packet generation unit 6 generates packets $P_1, P_2, ..., P_m$ corresponding to the pieces of data $d_1, d_2, ..., d_m$, respectively. The generated packets are variable-length packets, and hence a magnitude relation among data amounts of the packets $P_1, P_2, ..., P_m$ inherits a magnitude relation among the pieces of data $d_1, d_2, ..., d_m$ as it is.

The packet transmission unit 7 transmits the packets $P_1, P_2, ..., P_m$ to the packet communication network in this stated order. The packet transmission unit 7 transmits a packet set 8 that corresponds to the audio information X 4 and includes m packets whose data amounts are different from one another to the reception node 3 in ascending order of the data amounts. An order relation of the transmitted packets is illustrated as the packet set 8.

The reception node 3 may also preferably be a server machine or a client device installed on the network such as the Internet. Alternatively, the reception node 3 may also be a wireless communication device for performing packet data communication, such as a mobile phone terminal. In the reception node 3, when a packet reception unit 9 receives the packet set 8, a delay time measurement unit 10 measures a delay time for each packet. The packet transmission unit 7 transmits the packets $P_1, P_2, ..., P_m$ in this stated order, and hence the packet reception unit 9 basically receives the packets $P_1, P_2, ..., P_m$ in this stated order. It is assumed here that delay times of the packets $P_1, P_2, ..., P_m$ are represented by $t_1, t_2, ..., t_m$, respectively. A packet selection unit 11 selects and outputs a packet having the largest data amount from among the packets each having an allowable delay time based on the delay times $t_1, t_2, ..., t_m$ and the data amounts of the corresponding packets.

In general, the delay time on the network of the packet having a smaller data amount is conceivably shorter, and in contrast, the delay time on the network of the packet having a larger data amount is conceivably longer. In view of this point, a conceivable case is where the packet selection unit 11 sequentially determines the delay times of the packets $P_1, P_2, ..., P_m$, which have been received in this stated order, and when determining that the delay time of a given packet exceeds an allowable range, selects a packet received immediately before the given packet. In this case, packets received afterwards may be discarded without being subjected to the determination based on their delay times.

For example, when it is assumed that the determination is made based on the delay time $t_3$ of the packet $P_3$ and it is determined that the packet $P_3$ is significantly delayed, the packet selection unit 11 selects the packet $P_2$, which has been received immediately before the packet $P_3$. As described above, the delay time of the packet having a smaller data amount is conceivably shorter. It is thus conceivable that unless a traffic congestion situation suddenly changes, the fact that, within the packet set corresponding to the audio information X 4, the packets $P_1$ and $P_2$ received earlier are not detected to be significantly delayed and the packet $P_3$ is detected to be significantly delayed means that the packets $P_4$, $P_5, ..., P_m$ to be received afterwards are significantly delayed. In view of this idea, the determination based on the delay time may be omitted for the packet $P_4$ and packets to be received afterwards, or instead, the packets themselves may be discarded.

Further, the packets $P_1, P_2, ..., P_m$ are transmit-

ted in ascending order of their data amounts, and hence the packet received immediately before the packet determined as being significantly delayed has the largest data amount among the packets that have been received with a small delay. For example, as in the above-mentioned case, it is assumed that m=5 and the pieces of data $d_1$, $d_2$, ..., $d_5$ of the audio information X 4 are encoded and packetized at the bit rates of 32 kbps, 40 kbps, 48 kbps, 56 kbps, and 64 kbps, respectively, and then the resultant packets are transmitted. It is assumed in this case that the packet $P_3$, which is m=3 and stores the data $d_3$ encoded at the data rate of 48 kbps, has the delay time $t_3$ and the packet selection unit 11 determines that the packet $P_3$ is significantly delayed. At this time, both of the packets $P_1$ and $P_2$ received before the packet $P_3$ have arrived at the reception node 3 without being significantly delayed, and the packet $P_2$, which has been received immediately before the packet $P_3$, has the largest data amount between the packets $P_1$ and $P_2$.

When the packet selection unit 11 selects and outputs any one of the packets included in the packet set 8 based on the delay time in this manner, a decoder 12 decodes data stored in the selected packet and outputs audio information X' 13. With this, as compared with a case where only the packet generated at a single data rate is transmitted, the reception node 3 can decode the data encoded at a larger data rate that is determined depending on the congestion situation of the packet communication network to the audio information X'13.

Alternatively, the reception node 3 may transfer the packet selected by the packet selection unit 11 to another packet communication device via a packet transmission unit 14. A third node is a general packet communication device here. More specifically, the third node is preferably a wireless communication device for performing packet data communication, such as a mobile phone terminal, but may also be a server machine or a client device installed on the network such as the Internet. The third node does not need to select the packet unlike the second node, and decodes the received packet as it is.

In particular, a system including the third node is preferred in a case where a VoIP server is used to connect two portable terminals each executing a VoIP client to each other. In this case, the transmission node 2 corresponds to one of the portable terminals, the reception node 3 corresponds to the VoIP server, and the packet communication device as the transfer destination corresponds to the other of the portable terminals. A mode in which the packet selected by the reception node 3 is transferred to another node is described in more detail in a second embodiment of this invention.

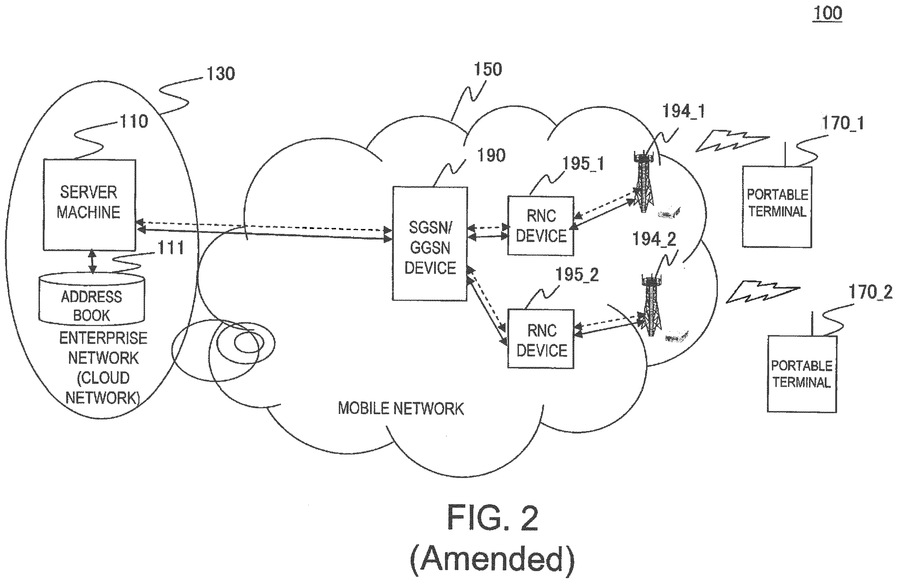

A description is given of a remote mobile communication system 100 according to the second embodiment of this invention with reference to Fig. 2. Fig. 2 illustrates a configuration adopted in a case where a mobile 3G packet network is used as a network 150 serving as the packet communication network and an SGSN/GGSN device is used as a packet transfer device, but another network (such as mobile LTE network, Wi-Fi network, WiMAX network, IP network, NGN network, or the Internet) may also be used.

Fig. 2 illustrates an embodiment of this invention in a case where, when a portable terminal 170_1 is connected to a server machine 110 installed on a cloud network 130 to transfer screen data through use of a thin client, a voice call is made from the portable terminal 170_1 to a portable terminal 170_2 by using the server machine 110. The portable terminals 170_1 and 170_2 in this case are each a thin client terminal having installed therein client software for the thin client. Further, Fig. 2 illustrates a configuration in which both of the portable terminals are connected to the mobile network 150.

In this embodiment, the server machine 110 of the thin client holds address book data, in which user names, phone numbers, and the like are registered and which is necessary for making a phone call from the thin client terminal 170_1, and hence the terminal 170_1 does not need to hold the address book at any time. Accordingly, even if the terminal 170_1 is lost, it is possible to ensure the security for the phone numbers, the user names, and the like. In Fig. 2, an address book 111 in which the user names, the phone numbers, and the like are registered is prepared in advance and connected to the server machine 110.

Fig. 2 illustrates the following case. The portable terminal 170_1 is connected to the server machine 110. In order to start a voice call to the portable terminal 170_2, on a virtual client of the server machine 110, a screen data generated by activating a voice call VoIP application is transferred from the server 110 to the portable terminal 170_1. The screen data is decoded and displayed by the client software of the portable terminal 170_1, and then a user name is designated on the screen. The portable terminal 170_1 subsequently makes a voice call to the portable terminal 170_2.

In this case, in each of the portable terminals 170_1 and 170_2, the client software for causing each of the portable terminals to operate as the terminal of the thin client is installed. The client software is described later. It is assumed in this embodiment that a voice codec installed in the client software of each of the portable terminals 170_1 and 170_2 is, as an example, G.711 as the ITU-T standard. Specifically, the G.711 voice codec can refer to the ITU-T G.711 standard, for example. Note that, another well-known voice codec other than G.711 may also be used as the voice codec.

Referring back to Fig. 2, when the portable terminal 170_1 performs an operation of activating the voice call VoIP application on the virtual client of the server machine 110 in order to start a voice call, the packet storing an operation signal for activating the VoIP application is transmitted from the portable terminal 170_1 to the server machine 110. When the server machine 110 receives the packet storing the operation signal, a control unit determines that a voice call is being made and activates the voice call VoIP application on the virtual client, and generates a screen. The control unit then encodes information on the generated screen and transfers the encoded screen information from the server machine 110 to the portable terminal 170_1. The portable terminal 170_1 decodes the received screen information and displays the decoded screen information on the screen of the portable terminal 170_1. An end user then performs an operation such as selection of the other party's user name and phone number, which is the next action.

Note that, when the screen is accompanied with audio data, an audio signal accompanying the screen is processed through a path different from the path for the voice call. Specifically, after a screen capturing unit 180 captures the screen, the audio signal is subjected to compression encoding by an audio encoder 189 and formed into a compressed and encoded stream, and transmitted to the portable terminal 170_1 as a packet different from the packet for a voice call under a predetermined protocol.

After the above-mentioned processing, well-known packets are transmitted from the portable terminal 170_1. Specifically, those packets are a packet storing a session control message under a session control protocol and a packet storing a bit stream (code) obtained by the audio encoder installed in the client software of the portable terminal by compressing and encoding an audio signal. It is assumed here that the G.711 voice codec under the ITU-T standard is used as the voice codec, but another well-known voice codec such as Adaptive Multi-Rate (AMR) voice codec under the 3GPP standard may also be used. Further, Session Initiation Protocol (SIP) is used as the session control protocol as an example, but another well-known protocol may also be used.

Those packets arrive at a base station 194_1 on the mobile network 150 whose service range includes the portable terminal and arrives at the server machine 110 of the cloud network 130 via an RNC device 195_1 and an SGSN/GGSN device 190.

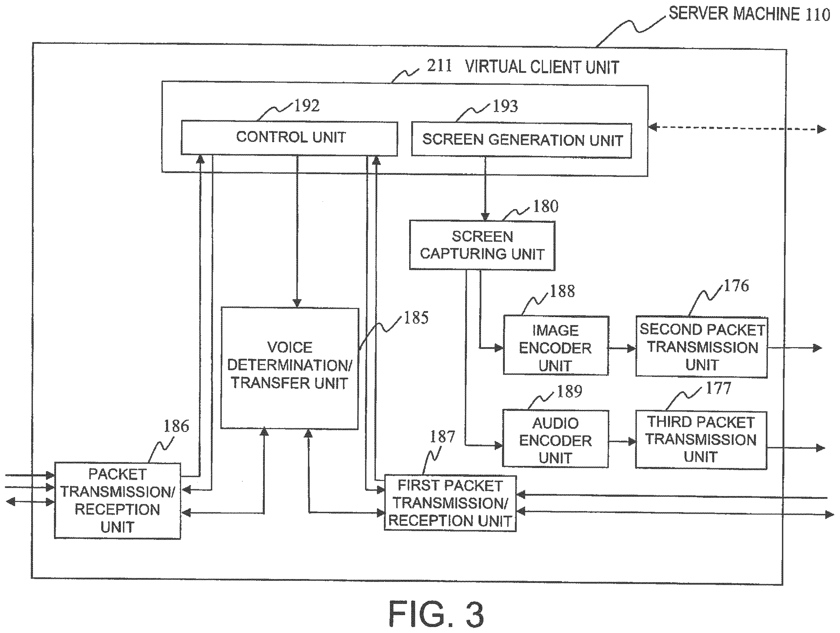

A description is next given of a configuration of the server machine 110 with reference to Fig. 3. Fig. 3 is a block diagram illustrating the configuration of the server machine 110. A virtual client unit 211 runs on a guest OS in a virtualized environment on a host OS, which is not shown in Fig. 3. Well-known OSes can be used as the host OS and the guest OS. It is assumed here as an example that Linux (trademark) and Android (trademark) are used as the host OS and the guest OS, respectively, but another OS such as Windows (trademark) may also be used.

In Fig. 3, the virtual client unit 211 includes a control unit 192 and a screen generation unit 193. To start a voice call, the portable terminal 170_1 illustrated in Fig. 2 stores in the packet the operation signal for activating the voice call VoIP application software on the virtual client and transmits the packet to the server machine 110. A packet transmission/reception unit 186 of the server machine 110 receives the packet storing the operation signal, extracts the operation signal from the packet, and outputs the extracted operation signal to the control unit 192.

The control unit 192 inputs the operation signal and executes the voice call VoIP application software when determining that the operation signal is a signal for activating the VoIP application software for a voice call. With this execution, the screen generation unit 193 generates the screen with the use of the application software and outputs the generated screen to a screen capturing unit 180. The screen capturing unit 180 captures the generated screen at a predetermined screen resolution and a predetermined frame rate and outputs the captured screen to an image encoder unit 188. The image encoder unit 188 uses a predetermined image encoder to compress and encode the input screen at a predetermined screen resolution, a predetermined bit rate, and a predetermined frame rate to acquire a compressed and encoded stream, and outputs the compressed and encoded stream to a second packet transmission unit 176. A well-known image compression encoding scheme such as H.264, MPEG-4, or JPEG 2000 can be used as the image compression encoding scheme to be used in this case.

The second packet transmission unit 176 stores the compressed and encoded stream input from the image encoder unit 188 in a predetermined packet and outputs the packet to the SGSN/GGSN device 190 illustrated in Fig. 2. A protocol for the packet in this case may be RTP/UDP/IP, UDP/IP, or TCP/IP. It is assumed here that UDP/IP is used as an example.

The portable terminal 170_1 of Fig. 2 next receives the compressed and encoded stream, decodes the received compressed and encoded stream at a predetermined screen resolution and a predetermined frame rate, and displays the decoded stream on the portable terminal 170_1 itself.

Referring back to Fig. 3, the control unit 192 reads from the address book 111 of Fig. 2 the other party's user name (in this case, a user who holds the terminal 170_2) and the other party's phone number (in this case, the phone number of the portable terminal 170_2). The screen generation unit 193 generates the screen, and the image encoder unit 188 compresses and encodes the generated screen to be transmitted to the portable terminal 170_1. On the portable terminal 170_1, the user and his/her phone number are selected while the transmitted screen is viewed on the terminal. Then, when a voice call is started, the portable terminal 170_1 transmits to the server machine 110 the packet storing a SIP message notifying that a voice call is to be started, and subsequently, transmits to the server machine 110 a voice signal in the form of the packets storing the bit streams having a plurality of kinds of bit rates, which are subjected to the compression encoding by the G.711 voice encoder installed in the client software.

The server machine 110 processes the packet relating to a voice call with the use of the path different from the path for the audio signal accompanying the screen, to thereby reduce a delay of the voice call.

The packet transmission/reception unit 186 outputs, from among the packets received from the portable terminal 170_1, the packet storing the SIP message to the control unit 192, and outputs the packets storing the compressed and encoded bit streams having the plurality of kinds of bit rates for the audio information to a voice determination/transfer unit 185.

Further, a first packet transmission/reception unit 187 outputs, among the packets received from the portable terminal 170_2, the packet storing the SIP message to the control unit 192, and outputs the packets storing the compressed and encoded bit streams having the plurality of kinds of bit rates for the audio information to the voice determination/transfer unit 185.

The control unit 192 performs the following operation when receiving the operation signal from the packet transmission/reception unit 186. (1) The control unit 192 analyzes the operation signal and activates the voice call VoIP application software when the operation signal indicates the operation of activating a voice call. (2) In the case of a voice call, the control unit 192 receives the SIP message from the packet transmission/reception unit 186. (3) The control unit 192 obtains, from the VoIP application software, the other party's phone number selected by the end user and acquires the other party's IP address from the phone number. (4) The control unit 192 rewrites the other party's IP address of the received SIP message to the IP address acquired in (3), and then outputs the rewritten SIP message and the other party's IP address to the first packet transmission/reception unit 187. (5) The control unit 192 inputs, from the packet transmission/reception unit 186, Session Description Protocol (SDP) from the portable terminal 170_1, and checks performance information on the voice codec installed in the client software of the portable terminal 170_1. It is assumed in this case that the G.711 voice codec is used as the voice codec as described above. The control unit 192 further inputs, from the first packet transmission/reception unit 187, Session Description Protocol (SDP) from the portable terminal 170_2, and checks performance information on the voice codec) installed in the terminal 170_2. In this case, the G.711 voice codec is used as the voice codec of the portable terminal 170_2 as described above, and hence the performance information matches that of the portable terminal 170_1. Transcoding or the like is therefore not necessary. (6) The control unit 192 issues the following instructions to the voice determination/transfer unit 185: an instruction to measure the delay times of the voice compressed and encoded bit streams having the plurality of bit rates that have been transmitted from the portable terminal 170_1 and received by the packet transmission/reception unit 186, extract the bit stream having the bit rate corresponding to the bit stream received immediately before the delay time increases, and discard the bit streams having other bit rates; an instruction to further transfer the extracted bit stream to the first packet transmission/reception unit 187; and an instruction to perform similar determination on the bit streams having the plurality of bit rates for the audio information, which have been transmitted from the portable terminal 170_2 and received by the first packet transmission/reception unit 187, and transfer the extracted bit stream to the packet transmission/reception unit 186.

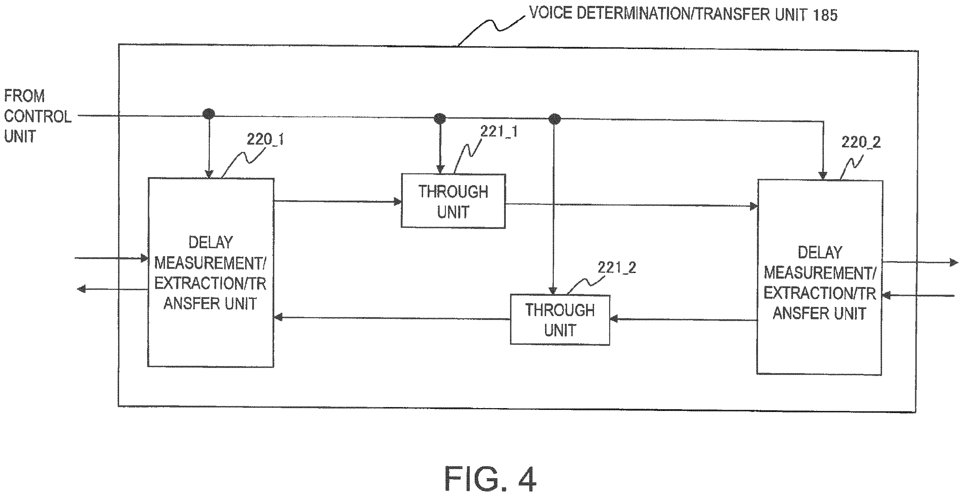

A description is next given of a configuration of the voice determination/transfer unit 185 with reference to Fig. 4. Referring to Fig. 4, a description is first given of a flow of a signal for a voice call that is made in a direction from the portable terminal 170_1 to the portable terminal 170_2. A delay measurement/extraction/transfer unit 220_1 inputs, from the packet transmission/reception unit 186, the compressed and encoded bit streams having the plurality of bit rates that have been transmitted from the portable terminal 170_1. It is assumed in this case that, as described later, the bit streams having five kinds of bit rates are transmitted from the client software of the portable terminal 170_1. Those bit rates are, specifically, 32 kbps, 40 kbps, 48 kbps, 56 kbps, and 64 kbps, and in this stated order of the bit rates, the pieces of data having the respective bit rates are stored in independent five kinds of packets, and the five kinds of packets are consecutively transmitted at time intervals of 20 ms, for example.

The delay measurement/extraction/transfer unit 220_1 receives the instruction from the control unit 192 of Fig. 3, and in accordance with the following Expression 1, measures respective arrival delay times of the five kinds of packets storing the compressed and encoded bit streams having the respective bit rates corresponding to the above-mentioned five kinds of bit rates.

$$Dj = R(j) - S(j) \qquad \text{(Expression 1)}$$

where Dj, R(j), and S(j) represent a delay time of a j-th packet, a reception time of the j-th packet, and a transmission time at which the j-th packet is transmitted by the portable terminal 170_1, respectively.

The delay measurement/extraction/transfer unit 220_1 compares the delay times Dj ($1 \leq j \leq 5$) calculated by Expression 1 with one another in the order of D1 to D5, and acquires Dj corresponding to the time at which the delay time starts to increase. For example, when it is assumed that the delay times of D1 to D4 are about 100 ms and the delay time of D5 increases to 150 ms, D5 corresponds to the packet at which the delay time starts to increase. The delay measurement/extraction/transfer unit 220_1 then extracts the bit stream stored in the packet that has been received immediately before the delay time increases. In other words, in this example, the delay measurement/extraction/transfer unit 220_1 extracts the bit stream of the fourth packet, that is, the bit stream having the bit rate of 56 kbps, and outputs the extracted bit stream every 20 ms, for example.

A through unit 221_1 receives the instruction from the control unit 192 and inputs the bit stream extracted by the delay measurement/extraction/transfer unit 220_1 every 20 ms, for example, and outputs the input bit stream to a delay measurement/extraction/transfer unit 220_2 while passing the bit stream therethrough.

The delay measurement/extraction/ transfer unit 220_2 transmits the bit stream data having the extracted bit rate to the first packet transmission/reception unit 187 of Fig. 3. Next, to describe an operation of a voice call in the opposite direction (direction from the portable terminal 170_2 to the portable terminal 170_1), it is only necessary to follow the above-mentioned processing in the opposite direction, and hence a description thereof is omitted.

Referring back to Fig. 3, the first packet transmission/reception unit 187 inputs from the control unit 192 the other party's IP address and the SIP message and inputs the bit stream data having the extracted bit rate, which has been output from the voice determination/transfer unit 185 every 20 ms, for example. The first packet transmission/reception unit 187 stores the bit stream data in the packet having a predetermined protocol, and outputs the packet toward the portable terminal 170_2 via the mobile network of Fig. 2. RTP/UDP/IP is used in this case as the predetermined protocol, but another well-known protocol may also be used.

In the case of the voice call in the opposite direction, the packet transmission/reception unit 186 inputs the bit stream data having the extracted bit rate every 20 ms, for example, stores the bit stream data in the packet having the predetermined protocol, and outputs the packet toward the portable terminal 170_1 via the mobile network of Fig. 2. RTP/UDP/IP is used in this case as the predetermined protocol, but another well-known protocol may also be used.

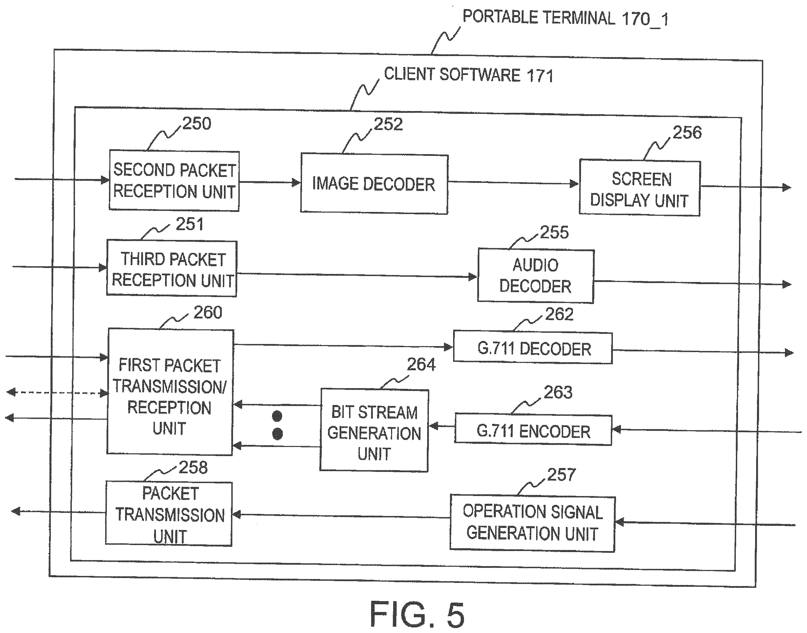

A description is next given of a configuration of the portable terminal 170_1, which is the client of the thin client, with reference to Fig. 5. The portable terminal 170_2 has the same configuration as that of the portable terminal 170_1 here, and hence the configuration of the portable terminal 170_1 is described as a representative. In Fig. 5, the portable terminal 170_1 has the client software 171 installed therein, thereby executing the operation of the client of the thin client. It is assumed here that, as described above, the G.711 voice codec is installed in the thin client software as the voice codec.

In Fig. 5, in the case of a voice call, when a user performs an operation on the screen of the portable terminal in order to activate the voice call VoIP application software on the screen, an operation signal generation unit 257 generates the operation signal for activation and a packet transmission unit 258 packetizes the operation signal and transmits the packet from the portable terminal 170_1 to the mobile network 150.

A first packet transmission/reception unit 260 inputs the SIP/SDP message and the packet storing the voice bit stream having the extracted bit rate, which have been transmitted from the server machine 110, and extracts the voice bit stream from the packet and outputs the extracted voice bit stream to a G.711 decoder 262.

The G.711 decoder 262 inputs the G.711 bit stream having the bit rate of 56 kbps, which is the bit rate extracted by the voice determination/transfer unit 185 of Fig. 3, every predetermined time interval, for example, every 20 ms, and decodes and outputs the input bit stream.

A G.711 encoder 263 performs G.711 encoding processing on a voice input signal every predetermined time interval, for example, every 20 ms, generates the bit stream having the bit rate of 64 kbps, and outputs the generated bit stream to a bit stream generation unit 264.

The bit stream generation unit 264 inputs the bit stream having the bit rate of 64 kbps every 20 ms, for example, and generates the bit streams having predetermined kinds of bit rates every 20 ms, for example. In this case, as described above, the bit stream generation unit 264 generates the bit streams having the five kinds of bit rates in total. The five kinds of bit rates are, specifically, 64 kbps, 56 kbps, 48 kbps, 40 kbps, and 32 kbps, and the bit stream generation unit 264 generates the bit streams having four kinds of bit rates, that is, 56 kbps, 48 kbps, 40 kbps, and 32 kbps.

A specific generation method is described next. First, the bit stream generation unit 264 inputs the bit stream having the bit rate of 64 kbps, which is the original bit rate. This bit stream is a stream having 8 bits per sample, which is obtained by sampling, and hence by performing processing of reducing the bits per sample by 1 bit, 2 bit, 3 bit, and 4 bit, it is possible to generate the bit streams having the bit rates of 56 kbps, 48 kbps, 40 kbps, and 32 kbps, respectively, with an extremely little processing amount. The bit stream generation unit 264 outputs the bit streams having the five kinds of bit rates in total to the first packet transmission/reception unit 260 every 20 ms, for example.

The first packet transmission/reception unit 260 inputs from the bit stream generation unit 264 the bit streams having the five kinds of bit rates every 20 ms, for example, stores the respective bit streams in independent packets, and consecutively transmits those packets to the mobile network 150 within 20 ms in a predetermined order at short time intervals. It is assumed that the predetermined order in this case is, as an example, an ascending order of the bit rate, that is, the order of 32 kbps, 40 kbps, 48 kbps, 56 kbps, and 64 kbps. It is assumed that the time interval for the packet is, for example, about 1 ms.

A second packet reception unit 250 inputs the compressed and encoded bit stream obtained by compressing and encoding a screen signal, decodes the compressed and encoded bit stream with the use of the same image codec as that of the server machine 110, and outputs the decoded screen signal to a screen display unit 256.

The screen display unit 256 inputs the decoded screen signal, builds the screen, and displays the screen on the screen of the portable terminal.

When there is an audio signal accompanying the screen, a third packet reception unit 251 inputs the packet storing the compressed and encoded bit stream obtained by compressing and encoding the audio signal, extracts the compressed and encoded bit stream obtained by compressing and encoding the audio signal, and outputs the extracted compressed and encoded bit stream to an audio decoder 255.

The audio decoder 255 inputs the compressed and encoded bit stream obtained by compressing and encoding the audio signal, decodes the compressed and encoded bit stream, and outputs the decoded bit stream from a speaker of the portable terminal 170_1.

This invention is described above by way of the embodiments, but this invention is not limited to the embodiments described above. For example, the case where the mobile 3G network is used as the network 150 is described above in the second embodiment, but a mobile Long Term Evolution (LTE) network may also be used. Alternatively, a fixed network, a next generation network (NGN), a W-LAN network, or the Internet may also be used. A fixed terminal may also be used in place of the portable terminal.

Further, instead of in the enterprise network, the server machine 110 may also be disposed in the mobile network or the fixed network.

Further, the server machine may also be disposed in any one of the mobile network and the fixed network.

Further, a smartphone or a tablet computer may also be used as the portable terminals 170_1, 170_2.

Further, another well-known voice codec may also be used as the voice codec.

Further, a method other than Expression 1 may also be used for the calculation of the delay time by the voice determination/transfer unit 185.

**Claims**

1. A packet communication system, comprising:

   a first node (2); and
   a second node (3),
   the first node comprising:

   packet generation means (5, 6) for generating a plurality of packets $P_1$, $P_2$, ..., $P_m$, each of the plurality of packets $P_1$, $P_2$, ..., $P_m$ corresponding to one of a plurality of data $d_1$, $d_2$, ... ,$d_m$, respectively, and having data amounts $q_1$, $q_2$, ..., $q_m$, respectively, that satisfy a relationship of $q_1 < q_2 < ... < q_m$, by encoding and packetizing each of the plurality of data $d_1$, $d_2$, ... ,$d_m$ at different bit rates from the same piece of audio information (4), where m is a natural number of 2 or more; and
   packet transmission means (7) for transmitting the plurality of packets $P_1$, $P_2$, ..., $P_m$ to the second node, which is different from the first node, via a packet communication network,

   the second node comprising:

   packet reception means (9) for receiving the plurality of packets $P_1$, $P_2$, ..., $P_m$;
   delay time measurement means (10) for measuring delay times $t_1$, $t_2$, ..., $t_m$ of the plurality of packets $P_1$, $P_2$, ..., $P_m$, respectively, a delay time of each packet being the time needed by said packet to travel from the first node to the second node; and
   packet selection means (11) for selecting one of the plurality of packets $P_1$, $P_2$, ..., $P_m$ based on the delay times $t_1$, $t_2$, ..., $t_m$ to designate a packet to be decoded; and
   decoding means (12) for decoding the designated packet,

   wherein the packet transmission means is adapted to transmit the plurality of packets $P_1$, $P_2$, ..., $P_m$ in ascending order of the data amounts, and
   wherein the packet selection means is adapted to sequentially determine, in the order of reception, the delay times of the packets which have been received, and select, when determining that the delay time of a given packet exceeds an allowable range, a packet that has been received immediately before the given packet, the determination based on the delay time being omitted with respect to a packet or packets which have been received after the given packet.

2. A system according to claim 1, further comprising a third node, which is different from both of the first node and the second node,
   wherein the second node further comprises means for transmitting the selected one of the plurality of packets to the third node.

3. A system according to any one of claims 1 to 2, wherein the second node further comprises decoding means for decoding the audio information based on the selected one of the plurality of packets.

4. A packet communication device (3), comprising:

   packet reception means (9) for receiving a plu-

rality of packets $P_1$, $P_2$, ..., $P_m$ via a packet communication network from a node, each of the plurality of packets $P_1$, $P_2$, ..., $P_m$ corresponding to one of a plurality of data $d_1$, $d_2$, ...,$d_m$, respectively, each of the plurality of data $d_1$, $d_2$, ... ,$d_m$ having been encoded and packetized at different bit rates from the same piece of audio information (4), and the plurality of packets $P_1$, $P_2$, ..., $P_m$ having data amounts $q_1$, $q_2$, ..., $q_m$, respectively, that satisfy a relationship of $q_1 < q_2 < ... < q_m$, where m is a natural number of 2 or more;

delay time measurement means (10) for measuring delay times $t_1$, $t_2$, ..., $t_m$ of the plurality of packets $P_1$, $P_2$, ..., $P_m$, respectively, a delay time of each packet being the time needed by said packet to travel from the node to the packet communication device;

packet selection means (11) for selecting one of the plurality of packets $P_1$, $P_2$, ..., $P_m$ based on the delay times $t_1$, $t_2$, ..., $t_m$ to designate a packet to be decoded; and

decoding means (12) for decoding the designated packet,

wherein the packet reception means is adapted to receive the plurality of packets $P_1$, $P_2$, ..., $P_m$ that have been transmitted in ascending order of the data amounts, and

wherein the packet selection means is adapted to sequentially determine, in the order of reception, the delay times of the packets which have been received, and select, when determining that the delay time of a given packet exceeds an allowable range, a packet that has been received immediately before the given packet, the determination based on the delay time being omitted with respect to a packet or packets which have been received after the given packet.

5. A computer program comprising computer program code which when being executed on a computer enables said computer to carry out the following:

receiving a plurality of packets $P_1$, $P_2$, ..., $P_m$ via a packet communication network from a node, each of the plurality of packets $P_1$, $P_2$, ..., $P_m$ corresponding to one of a plurality of data $d_1$, $d_2$, ... ,$d_m$, respectively, each of the plurality of data $d_1$, $d_2$, ... ,$d_m$ having been encoded and packetized at different bit rates from the same piece of audio information (4), and the plurality of packets $P_1$, $P_2$, ..., $P_m$ having data amounts $q_1$, $q_2$, ..., $q_m$, respectively, that satisfy a relationship of $q_1 < q_2 < ... < q_m$, where m is a natural number of 2 or more, the plurality of packets $P_1$, $P_2$, ..., $P_m$ have been transmitted in ascending order of the data amounts;

measuring delay times $t_1$, $t_2$, ..., $t_m$ of the plurality of packets $P_1$, $P_2$, ..., $P_m$, respectively, a delay time of each packet being the time needed by said packet to travel from the node to said computer;

selecting one of the plurality of packets $P_1$, $P_2$, ..., $P_m$ based on the delay times $t_1$, $t_2$, ..., $t_m$ to designate a packet to be decoded, by sequentially determining, in the order of reception, the delay times of the packets which have been received, and selecting, when determining that the delay time of a given packet exceeds an allowable range, a packet that has been received immediately before the given packet, the determination based on the delay time being omitted with respect to a packet or packets which have been received after the given packet; and

decoding the designated packet.

6. A method of transmitting audio information, comprising, when transmitting audio information from a first node to a second node via a packet communication network:

a packet generation step of generating, by the first node, a plurality of packets $P_1$, $P_2$, ..., $P_m$, each of the plurality of packets $P_1$, $P_2$, ..., $P_m$ corresponding to one of a plurality of data $d_1$, $d_2$, ... ,$d_m$, respectively, and having data amounts $q_1$, $q_2$, ..., $q_m$, respectively, that satisfy a relationship of $q_1 < q_2 < ... < q_m$, by encoding and packetizing each of the plurality of data $d_1$, $d_2$, ... ,$d_m$ at different bit rates from the same piece of audio information (4), where m is a natural number of 2 or more;

a packet transmission step of transmitting, by the first node, the plurality of packets $P_1$, $P_2$, ..., $P_m$ in ascending order of the data amounts to the second node via the packet communication network;

a packet reception step of receiving, by the second node, the plurality of packets $P_1$, $P_2$, ..., $P_m$ that have been transmitted from the first node;

a delay time measurement step of measuring, by the second node, delay times $t_1$, $t_2$, ..., $t_m$ of the plurality of packets $P_1$, $P_2$, ..., $P_m$, respectively, a delay time of each packet being the time needed by said packet to travel from the first node to the second node; and

a packet selection step of selecting, by the second node, one of the plurality of packets $P_1$, $P_2$, ..., $P_m$ based on the delay times $t_1$, $t_2$, ..., $t_m$ to designate a packet to be decoded, by sequentially determining, in the order of reception, the delay times of the packets which have been received, and selecting, when determining that the delay time of a given packet exceeds an allowable range, a packet that has been received immediately before the given packet, the determination based on the delay time being omitted with respect to a packet or packets which have been received after the given packet; and a decoding step of decoding, by the second node, the designated packet.

**Patentansprüche**

1. Paket-Kommunikationssystem, umfassend:

einen ersten Knoten (2); und
einen zweiten Knoten (3),
wobei der erste Knoten Folgendes umfasst:
Paketerzeugungsmittel (5, 6) zum Erzeugen einer Vielzahl von Paketen $P_1$, $P_2$, ..., $P_m$, wobei jedes der Vielzahl von Paketen $P_1$, $P_2$, ..., $P_m$ jeweils einem von einer Vielzahl von Daten $d_1$, $d_2$, ... ,$d_m$. entspricht. und jeweils Datenmengen $q_1$, $q_2$, ..., $q_m$ aufweist, die eine Beziehung von $q_1 < q_2 < ... < q_m$ erfüllen, durch Kodieren und Paketieren jedes der mehreren Daten $d_1$, $d_2$, ... , $d_m$ mit unterschiedlichen Bitraten von derselben Audioinformation (4), wobei m eine natürliche Zahl von 2 oder mehr ist; und
Paketübertragungsmittel (7) zum Übertragen der Vielzahl von Paketen $P_1$, $P_2$, ..., $P_m$ zu dem zweiten Knoten, der sich von dem ersten Knoten unterscheidet, über ein Paketkommunikationsnetz,
wobei der zweite Knoten umfasst:

Paket-Empfangsmittel (9) zum Empfangen der Vielzahl von Paketen $P_1$, $P_2$, ..., $P_m$;
eine Verzögerungszeitmesseinrichtung (10) zum Messen der Verzögerungszeiten $t_1$, $t_2$, ..., $t_m$ der Vielzahl von Paketen $P_1$, $P_2$, ..., $P_m$ wobei eine Verzögerungszeit jedes Pakets die Zeit ist, die das Paket benötigt, um von dem ersten Knoten zu dem zweiten Knoten zu gelangen; und
Paketauswahlmittel (11) zum Auswählen eines der Vielzahl von Paketen $P_1$, $P_2$, ..., $P_m$ basierend auf den Verzögerungszeiten $t_1$, $t_2$, ..., $t_m$ um ein zu dekodierendes Paket zu bestimmen; und

Dekodiermittel (12) zum Dekodieren des bestimmten Pakets,
wobei die Paketübertragungseinrichtung angepasst ist, um die Vielzahl von Paketen $P_1$, $P_2$, ..., $P_m$ in aufsteigender Reihenfolge der Datenmengen zu übertragen, und
wobei die Paketauswahleinrichtung angepasst ist, um in der Reihenfolge des Empfangs die Verzögerungszeiten der empfangenen Pakete sequentiell zu bestimmen und bei der Bestimmung, dass die Verzögerungszeit eines gegebenen Pakets einen zulässigen Bereich überschreitet, ein Paket auszuwählen, das unmittelbar vor dem gegebenen Paket empfangen wurde, wobei die Bestimmung auf der Grundlage der Verzögerungszeit in Bezug auf ein oder mehrere Pakete, die nach dem gegebenen Paket empfangen wurden, weggelassen wird.

2. System nach Anspruch 1, ferner umfassend einen dritten Knoten, der sich sowohl vom ersten als auch vom zweiten Knoten unterscheidet,
wobei der zweite Knoten ferner Mittel zum Übertragen des ausgewählten aus der Vielzahl von Paketen an den dritten Knoten umfasst.

3. System nach einem der Ansprüche 1 bis 2, wobei der zweite Knoten ferner Dekodiermittel zum Dekodieren der Audioinformation auf der Grundlage des ausgewählten der Vielzahl von Paketen umfasst.

4. Paketkommunikationsvorrichtung (3), umfassend:

Paketempfangsmittel (9) zum Empfangen einer Vielzahl von Paketen $P_1$, $P_2$, ..., $P_m$ über ein Paketkommunikationsnetzwerk von einem Knoten, wobei jedes der Vielzahl von Paketen $P_1$, $P_2$, ..., $P_m$ einem von einer Vielzahl von Daten $d_1$, $d_2$, ... ,$d_m$ entspricht, wobei jeder der Vielzahl von Daten $d_1$, $d_2$, ... ,$d_m$ mit unterschiedlichen Bitraten aus derselben Audioinformation (4) codiert und paketiert wurde und die Vielzahl der Pakete $P_1$, $P_2$, ..., $P_m$ Datenmengen q1, q2, ...., qm aufweisen, die eine Beziehung von q1 < q2 < ... < qm erfüllen, wobei m eine natürliche Zahl von 2 oder mehr ist;
Verzögerungszeit-Messmittel (10) zum Messen von Verzögerungszeiten t1, t2, ...., tm der Vielzahl von Paketen $P_1$, $P_2$, ..., $P_m$, wobei eine Verzögerungszeit jedes Pakets die Zeit ist, die das Paket benötigt, um von dem Knoten zur Paketkommunikationsvorrichtung zu gelangen;
Paketauswahlmittel (11) zum Auswählen eines der mehreren Pakete $P_1$, $P_2$, ..., $P_m$ basierend auf den Verzögerungszeiten t1, t2, ...., tm, um ein zu dekodierendes Paket zu bestimmen; und
Dekodiermittel (12) zum Dekodieren des bestimmten Pakets,
wobei die Paket-Empfangseinrichtung dafür ausgelegt ist, die Vielzahl von Paketen $P_1$, $P_2$, ..., $P_m$ zu empfangen, die in aufsteigender Reihenfolge der Datenmengen übertragen wurden, und
wobei die Paketauswahleinrichtung angepasst ist, um in der Reihenfolge des Empfangs die Verzögerungszeiten der empfangenen Pakete sequentiell zu bestimmen und bei der Bestimmung, dass die Verzögerungszeit eines gegebenen Pakets einen zulässigen Bereich überschreitet, ein Paket auszuwählen, das unmittelbar vor dem gegebenen Paket empfangen wurde, wobei die Bestimmung auf der Grundlage der Verzögerungszeit in Bezug auf ein oder mehrere Pakete, die nach dem gegebenen Paket empfangen wurden, weggelassen wird.

5. Computerprogramm, das einen Computerprogrammcode umfasst, der, wenn er auf einem Computer ausgeführt wird, es dem Computer ermöglicht, Folgendes auszuführen:

Empfangen einer Vielzahl von Paketen P1 $P_1$, $P_2$, ..., $P_m$ über ein Paketkommunikationsnetzwerk von einem Knoten, wobei jedes der Vielzahl von Paketen $P_1$, $P_2$, ..., $P_m$ einem von einer Vielzahl von Daten $d_1$, $d_2$, ... ,$d_m$. entspricht, wobei jeder der mehreren Daten $d_1$, $d_2$, ... ,$d_m$ codiert und mit unterschiedlichen Bitraten aus derselben Audioinformation (4) paketiert wurde, und die mehreren Pakete $P_1$, $P_2$, ..., $P_m$ Datenmengen q1, q2, ...., qm aufweisen, die eine Beziehung von q1<q2<....<qm erfüllen, wobei m eine natürliche Zahl von 2 oder mehr ist, die mehreren Pakete $P_1$, $P_2$, ..., $P_m$ in aufsteigender Reihenfolge der Datenmengen übertragen wurden;
Messen von Verzögerungszeiten t1, t2, ...., tm der Vielzahl von Paketen $P_1$, $P_2$, ..., $P_m$ wobei eine Verzögerungszeit jedes Pakets die Zeit ist, die das Paket benötigt, um von dem Knoten zu dem Computer zu gelangen;
Auswählen eines der mehreren Pakete $P_1$, $P_2$, ..., $P_m$ basierend auf den Verzögerungszeiten t1, t2, ...., tm, um ein zu decodierendes Paket zu bestimmen, indem in der Reihenfolge des Empfangs nacheinander die Verzögerungszeiten der empfangenen Pakete bestimmt werden, und Auswählen eines Pakets, das unmittelbar vor dem gegebenen Paket empfangen wurde, wenn festgestellt wird, dass die Verzögerungszeit eines bestimmten Pakets einen zulässigen Bereich überschreitet, wobei die Bestimmung basierend auf der Verzögerungszeit in Bezug auf ein oder mehrere Pakete, die nach dem gegebenen Paket empfangen wurden, weggelassen wird; und
Dekodierung des gewünschten Pakets.

6. Verfahren zum Übertragen von Audioinformationen, umfassend, wenn Audioinformationen von einem ersten Knoten zu einem zweiten Knoten über ein Paketkommunikationsnetzwerk übertragen werden:

einen Paketerzeugungsschritt des Erzeugens einer Vielzahl von Paketen $P_1$, $P_2$, ..., $P_m$, durch den ersten Knoten, wobei jedes der Vielzahl von Paketen $P_1$, $P_2$, ..., $P_m$ jeweils einem von einer Vielzahl von Daten $d_1$, $d_2$, ... ,$d_m$. entspricht und jeweils Datenmengen $q_1$, $q_2$, ..., $q_m$ aufweist, die eine Beziehung von $q_1$<$q_2$<...<$q_m$ erfüllen, durch Kodieren und Paketieren jedes der mehreren Daten $d_1$, $d_2$, ... ,$d_m$ mit unterschiedlichen Bitraten von derselben Audioinformation (4), wobei m eine natürliche Zahl von 2 oder mehr ist; und

einen Paketübertragungsschritt, bei dem durch den ersten Knoten die Vielzahl von Paketen $P_1$, $P_2$, ..., $P_m$ in aufsteigender Reihenfolge der Datenmengen über das Paketkommunikationsnetz an den zweiten Knoten übertragen wird; wobei der zweite Knoten umfasst:

einen Paketempfangsschritt des Empfangens der Vielzahl von Paketen $P_1$, $P_2$, ..., $P_m$ die von dem ersten Knoten gesendet wurden, durch den zweiten Knoten;
einen Verzögerungszeitmessschritt zum Messen der Verzögerungszeiten t1, t2, ...., tm der Vielzahl von Paketen $P_1$, $P_2$, ..., $P_m$ wobei eine Verzögerungszeit jedes Pakets die Zeit ist, die das Paket benötigt, um von dem ersten Knoten zu dem zweiten Knoten zu gelangen; und
einen Paketauswahlschritt, bei dem durch den zweiten Knoten eines der mehreren Pakete $P_1$, $P_2$, ..., $P_m$ basierend auf den Verzögerungszeiten t1, t2, .... ausgewählt wird, um ein zu dekodierendes Paket zu bezeichnen, indem in der Reihenfolge des Empfangs die Verzögerungszeiten der empfangenen Pakete sequentiell bestimmt werden, und
Auswählen, wenn bei Bestimmung bestimmt wird, dass die Verzögerungszeit eines gegebenen Pakets einen zulässigen Bereich überschreitet, eines Pakets, das unmittelbar vor dem gegebenen Paket empfangen wurde, wobei die Bestimmung auf der Grundlage der Verzögerungszeit in Bezug auf ein oder mehrere Pakete, die nach dem gegebenen Paket empfangen wurden, ausgelassen wird; und

einen Dekodierungsschritt der Dekodierung, durch den zweiten Knoten, des bezeichneten Pakets.

## Revendications

1. Système de communication par paquets, comprenant :

un premier noeud (2) ; et

un deuxième noeud (3),
le premier noeud comprenant :

un moyen de génération de paquets (5, 6) pour générer une pluralité de paquets $P_1$, $P_2$, ..., $P_m$, chacun de la pluralité de paquets $P_1$, $P_2$, ..., $P_m$ correspondant respectivement à l'une d'une pluralité de données $d_1$, $d_2$, ..., $d_m$, et ayant respectivement des quantités de données $q_1$, $q_2$, ..., $q_m$, qui satisfont une relation $q_1 < q_2 < ... < q_m$, par encodage et mise en paquets de chacune de la pluralité de données $d_1$, $d_2$, ..., $d_m$ à des débits binaires différents de la même information audio (4), où m est un entier naturel de 2 ou plus ; et
un moyen de transmission de paquets (7) pour transmettre la pluralité de paquets $P_1$, $P_2$, ..., $P_m$ au deuxième noeud, qui est différent du premier noeud, via un réseau de communication par paquets,

le deuxième noeud comprenant :

un moyen de réception de paquets (9) pour recevoir la pluralité de paquets $P_1$, $P_2$, ..., $P_m$ ;
un moyen de mesure de temps de propagation (10) pour mesurer respectivement des temps de propagation $t_1$, $t_2$, ..., $t_m$ de la pluralité de paquets $P_1$, $P_2$, ..., $P_m$, un temps de propagation de chaque paquet étant le temps nécessaire pour que ledit paquet circule du premier noeud au deuxième noeud ; et
un moyen de sélection de paquets (11) pour sélectionner l'un de la pluralité de paquets $P_1$, $P_2$, ..., $P_m$ sur la base des temps de propagation $t_1$, $t_2$, ..., $t_m$ pour désigner un paquet à décoder ; et

un moyen de décodage (12) pour décoder le paquet désigné,
dans lequel le moyen de transmission de paquets est adapté pour transmettre la pluralité de paquets $P_1$, $P_2$, ..., $P_m$ par ordre ascendant des quantités de données, et
dans lequel le moyen de sélection de paquets est adapté pour déterminer séquentiellement, dans l'ordre de réception, les temps de propagation des paquets qui ont été reçus, et sélectionner, lors de la détermination que le temps de propagation d'un paquet donné dépasse une plage admissible, un paquet qui a été reçu immédiatement avant le paquet donné, la détermination étant basée sur le temps de propagation omis par rapport à un paquet ou des paquets qui ont été reçus après le paquet donné.

2. Système selon la revendication 1, comprenant en outre un troisième noeud, qui est différent à la fois du premier noeud et du deuxième noeud, dans lequel le deuxième noeud comprend en outre un moyen de transmission du paquet sélectionné de la pluralité de paquets au troisième noeud.

3. Système selon l'une quelconque des revendications 1 et 2, dans lequel le deuxième noeud comprend en outre un moyen de décodage pour décoder les informations audio sur la base du paquet sélectionné de la pluralité de paquets.

4. Dispositif de communication par paquets (3), comprenant :

un moyen de réception de paquets (9) pour recevoir une pluralité de paquets $P_1$, $P_2$, ..., $P_m$ via un réseau de communication par paquets en provenance d'un noeud, chacun de la pluralité de paquets $P_1$, $P_2$, ..., $P_m$ correspondant respectivement à l'une d'une pluralité de données $d_1$, $d_2$, ..., $d_m$, chacune de la pluralité de données $d_1$, $d_2$, ..., $d_m$ ayant été codée et mise en paquets à des débits binaires différents de la même information audio (4), et la pluralité de paquets $P_1$, $P_2$, ..., $P_m$ ayant respectivement des quantités de données $q_1$, $q_2$, ..., $q_m$, qui satisfont une relation $q_1 < q_2 < ... < q_m$, où m est un entier naturel de 2 ou plus ;
un moyen de mesure de temps de propagation (10) pour mesurer respectivement des temps de propagation $t_1$, $t_2$, ..., $t_m$ de la pluralité de paquets $P_1$, $P_2$, ..., $P_m$, un temps de propagation de chaque paquet étant le temps nécessaire pour que ledit paquet circule du noeud au dispositif de communication par paquets ;
un moyen de sélection de paquets (11) pour sélectionner l'un de la pluralité de paquets $P_1$, $P_2$, ..., $P_m$ sur la base des temps de propagation $t_1$, $t_2$, ..., $t_m$ pour désigner un paquet à décoder ; et
un moyen de décodage (12) pour décoder le paquet désigné,
dans lequel le moyen de réception de paquets est adapté pour recevoir la pluralité de paquets $P_1$, $P_2$, ..., $P_m$ qui ont été transmis par ordre ascendant des quantités de données, et
dans lequel le moyen de sélection de paquets est adapté pour déterminer séquentiellement, dans l'ordre de réception, les temps de propagation des paquets qui ont été reçus, et sélectionner, lors de la détermination que le temps de propagation d'un paquet donné dépasse une plage admissible, un paquet qui a été reçu immédiatement avant le paquet donné, la détermination étant basée sur le temps de propagation omis par rapport à un paquet ou des paquets qui ont été reçus après le paquet donné.

**5.** Programme d'ordinateur comprenant un code de programme d'ordinateur qui, lorsqu'il est exécuté sur un ordinateur, permet audit ordinateur de réaliser ce qui suit :

la réception d'une pluralité de paquets $P_1$, $P_2$, ..., $P_m$ via un réseau de communication par paquets en provenance d'un noeud, chacun de la pluralité de paquets $P_1$, $P_2$, ..., $P_m$ correspondant respectivement à l'une d'une pluralité de données $d_1$, $d_2$, ..., $d_m$, chacune de la pluralité de données $d_1$, $d_2$, ..., $d_m$ ayant été encodée et mise en paquets à des débits binaires différents de la même information audio (4), et la pluralité de paquets $P_1$, $P_2$, ..., $P_m$ ayant respectivement des quantités de données $q_1$, $q_2$, ..., $q_m$, qui satisfont une relation $q_1 < q_2 < ... < q_m$, où m est un entier naturel de 2 ou plus, la pluralité de paquets $P_1$, $P_2$, ..., $P_m$ a été transmise par ordre ascendant des quantités de données ;

la mesure respective de temps de propagation $t_1$, $t_2$, ..., $t_m$ de la pluralité de paquets $P_1$, $P_2$, ..., $P_m$, un temps de propagation de chaque paquet étant le temps nécessaire pour que ledit paquet circule du noeud audit ordinateur ;

la sélection de l'un de la pluralité de paquets $P_1$, $P_2$, ..., $P_m$ sur la base des temps de propagation $t_1$, $t_2$, ..., $t_m$ pour désigner un paquet à décoder, par la détermination séquentielle, dans l'ordre de réception, des temps de propagation des paquets qui ont été reçus, et la sélection, lors de la détermination que le temps de propagation d'un paquet donné dépasse une plage admissible, d'un paquet qui a été reçu immédiatement avant le paquet donné, la détermination étant basée sur le temps de propagation omis par rapport à un paquet ou des paquets qui ont été reçus après le paquet donné ; et

le décodage du paquet désigné.

**6.** Procédé de transmission d'informations audio, comprenant, lors de la transmission d'informations audio d'un premier noeud à un deuxième noeud via un réseau de communication par paquets :

une étape de génération de paquets consistant à générer, par le premier noeud, une pluralité de paquets $P_1$, $P_2$, ..., $P_m$, chacun de la pluralité de paquets $P_1$, $P_2$, ..., $P_m$ correspondant respectivement à l'une d'une pluralité de données $d_1$, $d_2$, ..., $d_m$, et ayant respectivement des quantités de données $q_1$, $q_2$, ..., $q_m$, qui satisfont une relation $q_1 < q_2 < ... < q_m$, par encodage et mise en paquets de chacune de la pluralité de données $d_1$, $d_2$, ..., $d_m$ à des débits binaires différents de la même information audio (4), où m est un entier naturel de 2 ou plus ;

une étape de transmission de paquets consistant à transmettre, par le premier noeud, la pluralité de paquets $P_1$, $P_2$, ..., $P_m$ par ordre ascendant des quantités de données au deuxième noeud via le réseau de communication par paquets,

une étape de réception de paquets consistant à recevoir, par le deuxième noeud, la pluralité de paquets $P_1$, $P_2$, ..., $P_m$ qui ont été transmis depuis le premier noeud ;

une étape de mesure de temps de propagation consistant à mesurer respectivement, par le deuxième noeud, des temps de propagation $t_1$, $t_2$, ..., $t_m$ de la pluralité de paquets $P_1$, $P_2$, ..., $P_m$, un temps de propagation de chaque paquet étant le temps nécessaire pour que ledit paquet circule du premier noeud au deuxième noeud ; et

une étape de sélection de paquets consistant à sélectionner, par le deuxième noeud, l'un de la pluralité de paquets $P_1$, $P_2$, ..., $P_m$ sur la base des temps de propagation $t_1$, $t_2$, ..., $t_m$ pour désigner un paquet à décoder, par la détermination séquentielle, dans l'ordre de réception, des temps de propagation des paquets qui ont été reçus, et la sélection, lors de la détermination que le temps de propagation d'un paquet donné dépasse une plage admissible, d'un paquet qui a été reçu immédiatement avant le paquet donné, la détermination étant basée sur le temps de propagation omis par rapport à un paquet ou des paquets qui ont été reçus après le paquet donné ; et

une étape de décodage consistant à décoder, par le deuxième noeud, le paquet désigné.

FIG. 1

FIG. 2
(Amended)

SERVER MACHINE 110

211 VIRTUAL CLIENT UNIT

192
CONTROL UNIT

193
SCREEN GENERATION UNIT

180
SCREEN CAPTURING UNIT

185
VOICE DETERMINATION/ TRANSFER UNIT

188
IMAGE ENCODER UNIT

176
SECOND PACKET TRANSMISSION UNIT

189
AUDIO ENCODER UNIT

177
THIRD PACKET TRANSMISSION UNIT

186
PACKET TRANSMISSION/ RECEPTION UNIT

187
FIRST PACKET TRANSMISSION/ RECEPTION UNIT

FIG. 3

VOICE DETERMINATION/TRANSFER UNIT 185

FROM CONTROL UNIT

220_1

221_1

220_2

DELAY MEASUREMENT/ EXTRACTION/TR ANSFER UNIT

THROUGH UNIT

DELAY MEASUREMENT/ EXTRACTION/TR ANSFER UNIT

221_2

THROUGH UNIT

EP 2 903 224 B1

17

FIG. 4

PORTABLE TERMINAL 170_1

CLIENT SOFTWARE 171

```
              250                    252                           256
     ┌──────────────────┐   ┌──────────────────┐         ┌──────────────────┐
     │  SECOND PACKET   │   │                  │         │     SCREEN       │
───▶ │ RECEPTION UNIT   │──▶│  IMAGE DECODER   │────────▶│  DISPLAY UNIT    │────▶
     └──────────────────┘   └──────────────────┘         └──────────────────┘

              251                                          255
     ┌──────────────────┐                         ┌──────────────────┐
     │   THIRD PACKET   │                         │      AUDIO       │
───▶ │  RECEPTION UNIT  │────────────────────────▶│    DECODER       │────▶
     └──────────────────┘                         └──────────────────┘

              260                              262
     ┌──────────────────┐              ┌──────────────────┐
     │   FIRST PACKET   │─────────────▶│  G.711 DECODER   │────▶
     │  TRANSMISSION/   │     264      └──────────────────┘
◀--- │   RECEPTION      │   ┌──────────────────┐    263
◀─── │     UNIT         │◀──│   BIT STREAM     │◀──┌──────────────────┐
     │                  │ ● │   GENERATION     │   │  G.711 ENCODER   │◀───
     │                  │ ● │     UNIT         │◀──└──────────────────┘
     └──────────────────┘   └──────────────────┘

              258                              257
     ┌──────────────────┐              ┌──────────────────┐
     │     PACKET       │              │ OPERATION SIGNAL │
◀─── │  TRANSMISSION    │◀─────────────│ GENERATION UNIT  │◀───
     │     UNIT         │              └──────────────────┘
     └──────────────────┘
```

FIG. 5

**REFERENCES CITED IN THE DESCRIPTION**

**Patent documents cited in the description**

- JP 2005039724 A

- WO 2010112074 A